# EUROPÄISCHE PATENTSCHRIFT

(11) **EP 1 920 506 B1**
(45) Veröffentlichungstag und Bekanntmachung des Hinweises auf die Patenterteilung: **27.10.2010**
(21) Anmeldenummer: 06806740.4
(22) Anmeldetag: 01.09.2006
(51) Int. Cl.: H01R 43/16, H01R 13/52, H01R 13/504, H01R 13/405, H01R 13/58, H01R 43/24

(54) **ELEKTRISCHER STECKVERBINDER UND VERFAHREN ZU DESSEN HERSTELLUNG**
ELECTRICAL PLUG-IN CONNECTOR AND METHOD FOR ITS MANUFACTURE
CONNECTEUR ELECTRIQUE ET SON PROCEDE DE PRODUCTION

(30) Priorität: 02.09.2005 DE 102005042027
(43) Veröffentlichungstag der Anmeldung: 14.05.2008
(73) Patentinhaber: Segu Systemelektrik GmbH, 36456 Barchfeld (DE)
(72) Erfinder: LAPP, Grégory, 28309 Bremen (DE); ARNOLD, Harald, 36433 Gumpelstadt (DE)
(74) Vertreter: Engel, Christoph Klaus
(86) Internationale Anmeldenummer: PCT/EP2006/065910
(87) Internationale Veröffentlichungsnummer: WO 2007/026012

(56) Entgegenhaltungen:
- EP-A1- 1 122 840
- DE-A1- 4 013 509
- DE-A1- 4 426 812
- GB-A- 2 152 301
- GB-A- 2 258 955
- US-A1- 2003 017 752
- US-A1- 2003 032 321

## Beschreibung

Die vorliegende Erfindung betrifft ein Verfahren zur Herstellung eines elektrischen Steckverbinders mit mehreren Kontakten sowie einen solchen Steckverbinder. Derartige Steckverbinder dienen dem Anschluss elektrischer Leitungen an fest angeordnete Kontaktgegenstücke oder an komplementäre Steckergegenstücke.

In der DE 44 26 812 A1 ist ein wasserdichtes zweiteiliges Gehäuse zum Schutz von Elektronikschaltkreisen beschrieben, welches aus zwei verschieden harten Kunststoffkomponenten besteht. Für das eigentliche Gehäuse wird eine harte Komponente verwendet. Eine weichere Komponente an der Schnittstelle zwischen den Gehäuseteilen dient beim Zusammenfügen der Gehäuseteile als Abdichtung. Um die Abdichtungsprobleme im Bereich des Steckers zu lösen, ist der Steckerteil selbst und ein Gehäuseteil einstückig ausgeführt. Der Steckerteil besteht wiederum aus den beiden Kunststoffkomponenten. Er besitzt ein härteres Innenteil und darum herum einen weicheren Dichtkragen. Die zur Leiterplatte führenden Kontaktstifte sind vorzugsweise fest im inneren härteren Kunststoffteil des Steckerteils eingebettet. In dieses Steckerteil greift ein Gegenstecker aus hartem Kunststoff abdichtend ein.

Aus der GB 2 258 955 A ist ein Netzspannungsstecker mit zwei Potentialkontakten und einem Schutzkontakt bekannt. Dieser Stecker wird in mehreren Verfahrensschritten hergestellt, wobei zunächst die Potentialkontakte in eine Form eingesetzt und mit einem Kunststoff umspritzt werden, welcher eine Sockelplatte bildet. Nach diesem Spritzvorgang wird der Schutzleiterkontakt an der Sockelplatte befestigt, so dass nachfolgend die Leitungen an die Kontakte angeschlossen werden können. Abschließend werden die Sockelplatte und der Kabelanschlussbereich der Kontakte, einschließlich eines Kabelabschnittes zur Ausbildung eines Gehäuses mit einem weiteren Kunststoff umspritzt. Diese Vorgehensweise ist relativ aufwendig, da die verschiedenen Kontakte in unterschiedlichen Verfahrensschritten montiert werden müssen. Dies hat auch zur Folge, dass die Lage der einzelnen Kontakte zueinander relativ ungenau ist, was zwar bei Netzspannungssteckern tolerierbar ist, im Niederspannungsbereich, wo zahlreiche Kontakte exakt zueinander ausgerichtet sein müssen, um die Stecker möglichst klein zu halten, jedoch zu erheblichen Problemen führen würde. Bei dem aus dieser Druckschrift bekannten Herstellungsverfahren bereitet außerdem die Verbindung zwischen dem angespritzten Gehäuse und der Sockelplatte Probleme, so dass keine feuchtigkeitsdichte Verbindung erzielbar ist. Die Sockelplatte wird beim Anspritzen des Kunststoffgehäuses normalerweise nicht angeschmolzen, wodurch zwischen den beiden Materialien geringfügige Spalte verbleiben, die sich auf Grund unterschiedlicher Temperaturausdehnung im Laufe der Lebensdauer des Netzspannungssteckers weiter vergrößern können.

Ein vergleichbarer Netzspannungsstecker, der nach ähnlichen Prinzipien hergestellt wird, ist aus der GB 2 152 301 A bekannt. Auch hier bestehen die Probleme der exakten Positionierung der einzelnen Kontaktstifte und der dauerhaft abdichtenden Verbindung zwischen der Sockelplatte und dem angespritzten Gehäuse.

Aus der EP 1 122 840 B1 ist ein Verfahren zur Herstellung eines Steckeraufnahmeteils bekannt. Dabei werden elektrische Leiter durch Crimpen mit Kontaktstiften verbunden. Anschließend werden die einzelnen Kontaktstifte mit den angecrimpten Leitungen in eine Form eingesetzt, um dort mit einem Kunststoff umspritzt zu werden. Der Montagevorgang erfordert komplizierte Werkzeuge, da die einzelnen Kontaktstifte zugeführt und mit den Leitern vercrimpt werden müssen. Nachfolgend ist eine Positionierung in der Spritzform erforderlich, was insbesondere bei sehr kleinen und zahlreichen Kontaktstiften Schwierigkeiten bereitet.

Die DE 40 13 509 C2 , die als nachstliegender Stand der Technik angesehen wird, beinhaltet ein Verfahren zur Herstellung von Steckern mit einem Kunststoffgehäuse und eingebetteten Kontaktzungen. In einem ersten Schritt wird der Kontaktzungen-Rohling aus einem Metallblech ausgestanzt, wobei im Rohling ein oder mehrere Stege wenigstens je zwei Kontaktzungen zusammenhalten. Anschließend werden die Enden der Kontaktzungen mit den blanken Aderenden eines mehradrigen Kabels verbunden. Die Verbindungsbereiche von Kontaktzungen und Aderenden werden in eine Gießform eingebracht und mit einem geeigneten Kunststoff umgossen bzw. umspritzt. Die die Kontaktzungen verbindenden Stege und die entsprechenden Teile der Kontaktzungen liegen dabei außerhalb der Gießform und daher auch außerhalb der gegossenen Steckertülle. Nach dem Gießen bzw. Spritzen werden die Stege am Rohling entfernt. Die Steckertülle mit Kabel und Rohling wird in einem letzten Schritt mit einem Gehäusekörper umgossen bzw. umspritzt. Da bei diesem Verfahren Kontakte und Leitung bereits vor dem Durchtrennen der Stege miteinander vergossen werden, erfordert das Durchtrennen einen Zugang von der Kontaktseite aus. Das Durchtrennen der Stege aus dieser Richtung stellt jedoch insbesondere bei Präzisionskontakten mit kleinen Abmessungen erhöhte Anforderungen an die Genauigkeit, um die Kontaktzungen bzw. ihre Oberflächen nicht zu beschädigen.

In der DE 698 05 517 T2 ist ein in zwei Stufen gegossener elektrischer Verbinder und ein Verfahren zum Gießen elektrischer Anschlussklemmen in einem geformten Gehäuse in zwei Stufen beschrieben. An einem Trägerstreifen befinden sich Anschlussklemmen, welche an ihren Endabschnitten durch einen quer verlaufenden Streifen fixiert werden. Die Anschlussklemmen werden zunächst in ein nicht leitendes Gehäuse gegossen. Anschließend werden der Trägerstreifen und der quer verlaufende Streifen abgetrennt. In den Anschlussabschnitten der Anschlussklemmen werden die anzuschließenden Drähte befestigt. In einem letzten Schritt wird die Anordnung umgossen. Das Verfahren kann insbesondere zur Fertigung von Universal Serial Bus (USB) Steckern eingesetzt werden. Details zur Erreichung einer feuchtigkeitsdichten, form- und kraftschlüssigen Ausgestaltung der Verbindung der in den einzelnen Spritzvorgängen entstehenden Gehäuseabschnitte können nicht entnommen werden.

Die Aufgabe der vorliegenden Erfindung besteht somit darin, einen verbesserten Steckverbinder und insbesondere ein Verfahren zu dessen Herstellung bereit zu stellen, welches eine leichtere Montage gestattet und gleichzeitig eine hohe Präzision der Lage der einzelnen Kontaktstifte sicherstellt. Das Einbringen der Kontaktstifte in den Steckverbinder soll auch bei zahlreichen kleinen Kontakten schnell und einfach möglich sein. Außerdem soll die Gefahr einer Lageveränderung der Kontaktstifte während des Spritzvorgangs reduziert werden. Insbesondere ist es Aufgabe der Erfindung, einen wasserdichten Abschluss der Kabelanschlussenden und der daran angeschlossenen elektrischen Leiter durch das umgebende Gehäuse des Steckverbinders zu gewährleisten.

Die genannte Aufgabe wird durch das im Anspruch 1 angegebene Verfahren und den im unabhängigen Anspruch 8 definierten Steckverbinder gelöst. In den Unteransprüchen sind bevorzugte Ausführungsformen des Verfahrnes und des Steckverbinders genannt.

Das erfindungsgemäße Verfahren zeichnet sich insbesondere dadurch aus, dass die Kontakte des Steckverbinders, solange miteinander verbunden bleiben, bis sie durch einen entsprechenden Spritzvorgang im vorderen Gehäuseabschnitt befestigt sind. Daraus ergibt sich eine deutliche Vereinfachung der Montage, da nicht jeder einzelne Kontaktstift in der Spritzform positioniert werden muss, sondern sämtliche Kontakte oder zumindest mehrere zu einer Gruppe zusammengefasste Kontakte gemeinsam in die Form eingebracht werden können.

Gerade bei Steckverbindern mit einer sehr großen Kontaktanzahl wird es vorzuziehen sein, die Kontakte zu mehreren Gruppen zusammenzufassen, die dann beispielsweise in mehreren Ebenen übereinander im Gehäuse angeordnet werden. Da die einzelnen Kontakte erst nach dem Befestigen im vorderen Gehäuseabschnitt voneinander getrennt werden, bleibt die Lage der Kontakte zueinander unverändert, wodurch eine hohe Präzision erreichbar ist.

Beim Ausbilden des vorderen Gehäuseabschnittes werden vorzugsweise Kupplungsmittel mit geformt, die der mechanischen Ankopplung an ein komplementäres Steckergegenstück oder an fest installierte Kontakte dienen.

Nachdem die Leitungen an den Kabelanschlussenden der Kontakte befestigt wurden, wird der hintere Gehäuseabschnitt durch Kunststoffspritzen ausgebildet, wobei ein Umgreifen des vorderen Gehäuseabschnitts in einem Überdeckungsabschnitt erfolgt. Zur wasserdichten Verbindung der beiden Gehäuseabschnitte ist es dabei allerdings nicht erforderlich, dass das Material des vorderen Gehäuseabschnittes erneut angeschmolzen wird. Vielmehr genügt die Ausbildung eines oder mehrerer umlaufender Abdichtringe, die jeweils an den Gehäuseabschnitten vorgesehen sind und zahnförmig ineinander greifen.

Weitere Vorteile, Einzelheiten und Weiterbildungen der Erfindung ergeben sich aus der nachfolgenden Beschreibung einer bevorzugten Ausführungsform des Steckverbinders, unter Bezugnahme auf die Zeichnung. Es zeigen:
- Fig. 1: eine perspektivische Darstellung einer aus zwei verbundenen Kontakten bestehenden Kontaktgruppe;
- Fig. 2: eine perspektivische Durchsichtdarstellung eines vorderen Gehäuseabschnittes mit darin befestigten Kontakten;
- Fig. 3: eine perspektivische Ansicht des Steckverbinders mit an den Kontakten angebrachten elektrischen Leitungen;
- Fig. 4: eine perspektivische Ansicht des Steckverbinders mit angebrachtem hinteren Gehäuseabschnitt.

In der nachfolgenden Beschreibung einer bevorzugten Ausführungsform eines elektrischen Steckverbinders werden neben den Merkmalen dieses Steckverbinders auch die Schritte erläutert, die für dessen Herstellung ausgeführt werden können. Es ist aber auch möglich, einzelne Teilschritte abzuwandeln oder ein anderes Herstellungsverfahren anzuwenden, um den erläuterten Steckverbinder zu erzeugen. Ebenso ist es denkbar, mit den dargestellten Verfahrensschritten abgewandelte Ausführungsformen von Steckverbindern herzustellen, die sich von dem hier erläuterten Beispiel durch die Anzahl der verwendeten Kontakte, die Leitungsführung oder die Gehäuseform unterscheiden.

Bevorzugt werden die durch die Erfindung betroffenen Steckverbinder im Niederspannungsbereich eingesetzt, also beispielsweise für die Übertragung von Sensorsignalen oder Steuerspannungen. Ein spezielles Einsatzgebiet derartiger Steckverbinder ist die Fahrzeugtechnik, wo hohe Anforderungen an die Haltbarkeit solcher Steckverbinder gestellt werden.

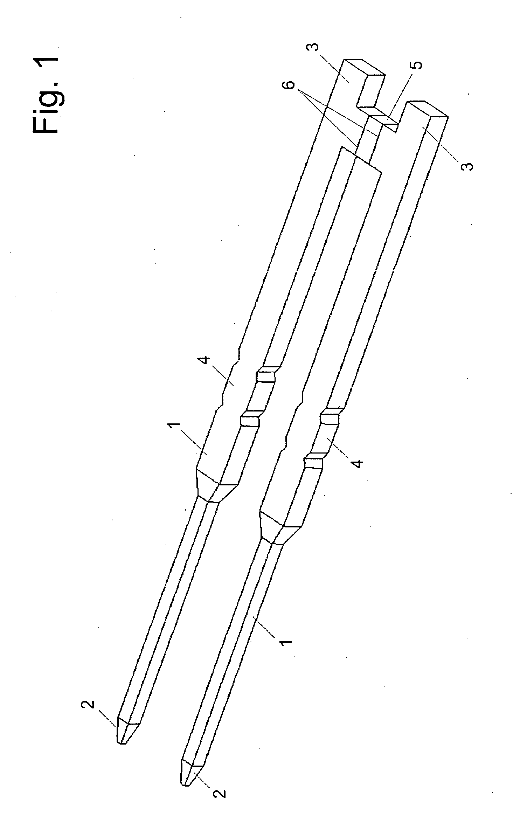

Um einen elektrischen Steckverbinder herzustellen, müssen zunächst die Kontaktstifte (nachfolgend auch Kontakte genannt) aus einem elektrisch leitfähigen Material hergestellt werden. In der Fig. 1 sind in einer perspektivischen Ansicht zwei Kontakte 1 dargestellt, die an ihrem vorderen Ende Kontaktspitzen 2 und am hinteren Ende Kabelanschlussenden 3 aufweisen. Etwa im mittleren Bereich der Kontakte befinden sich Haltebereiche 4, die zur Befestigung der Kontakte im Gehäuse in der Kunststoffmasse eingegossen bzw. eingespritzt werden. Die Haltebereiche 4 können für eine bessere Fixierung Profilierungen aufweisen.

Im Unterschied zur herkömmlichen Vorgehensweise werden die Kontakte bei ihrer Herstellung noch nicht vereinzelt. Vielmehr bleiben benachbarte Kontakte in einem kurzen Längsabschnitt über ein Verbindungsstück 5 miteinander verbunden, bis die Kontakte im Gehäuse befestigt sind. Am Verbindungsstück 5 können eine oder mehrere Sollbruchstellen 6 angeordnet werden, die das spätere Trennen der Kontakte erleichtern. Die Sollbruchstellen können als Materialschwächungen gestaltet werden oder nur als "imaginäre Sollbruchstellen" vorhanden sein und lediglich die Position markieren, an denen die Kontakte später getrennt werden sollen.

Beim dargestellten Beispiel sind zwei Kontakte zu einer Kontaktgruppe zusammengefasst, die in ihrer Gesamtheit in den Steckverbinder eingebracht wird. Einer solchen Kontaktgruppe können in anderen Ausführungsformen zahlreiche Einzelkontakte zugeordnet sein. Für die Herstellung vielpoliger Steckverbinder lassen sich auch mehrere Kontaktgruppen ausbilden, die in eine entsprechende Form eingelegt werden, um die Gehäuseteile des Steckverbinders um diese Gruppen herum zu spritzen. Jede Kontaktgruppe umfasst aber mindestens zwei Einzelkontakte, die über das erwähnte Verbindungsstück miteinander verbunden sind.

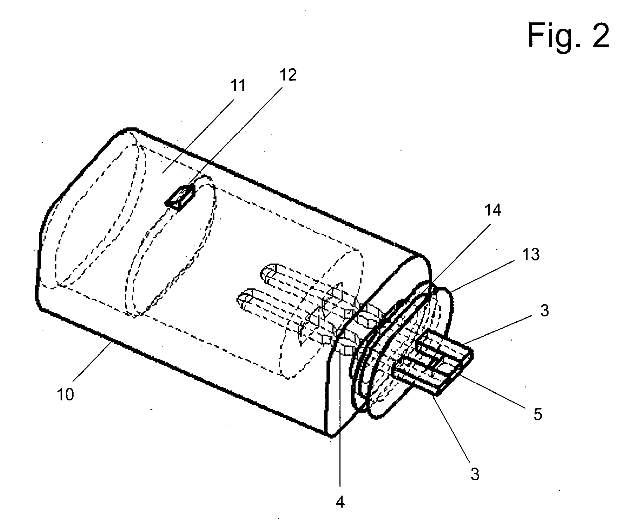

Im weiteren Herstellungsprozess werden die miteinander verbundenen Kontakte in eine geeignete Form eingelegt (nicht dargestellt), um nachfolgend durch Kunststoffspritzen einen vorderen Gehäuseabschnitt zu erzeugen. In Fig. 2 ist in einer perspektivischen Ansicht der Steckverbinder nach Ausführung des Spritzvorganges zur Erzeugung eines vorderen Gehäuseabschnittes 10 dargestellt. Im Abschnitt der Haltebereiche 4 wird das Kunststoffmaterial an die Kontakte angespritzt, um diesen vorderen Gehäuseabschnitt 10 zu befestigen. Bei der gezeigten Ausführungsform sind die Kontaktspitzen 2 von einem hülsenförmigen Bereich 11 des vorderen Gehäuseabschnitts umgeben, jedoch bleiben sie innerhalb dieser Hülse für die Kontaktierung mit komplementären Steckerelementen zugänglich.

Die Kabelanschlussenden 3 und das Verbindungsstück 5 ragen aus dem vorderen Gehäuseabschnitt 10 an dessen Rückseite heraus, um für den Anschluss der Leitungen zugänglich zu bleiben. Am vorderen Gehäuseabschnitt 10 können weiterhin Kupplungsmittel 12 angeordnet werden, die der mechanischen Ankopplung an ein nicht dargestelltes Steckergegenstück dienen.

Am hinteren Ende des vorderen Gehäuseabschnitts 10 sind an einem Überdeckungsabschnitt 13 ein oder mehrere Abdichtringe 14 ausgeformt, die einen wellenförmigen Oberflächenverlauf an diesem Überdeckungsabschnitt erzeugen.

Nachdem die noch verbundenen Kontakte im vorderen Gehäuseabschnitt befestigt sind, kann eine Auftrennung der Kontakte erfolgen, indem das Verbindungsstück entfernt wird. Dies geschieht z.B. durch Herausbrechen des Verbindungsstücks an den Sollbruchstellen.

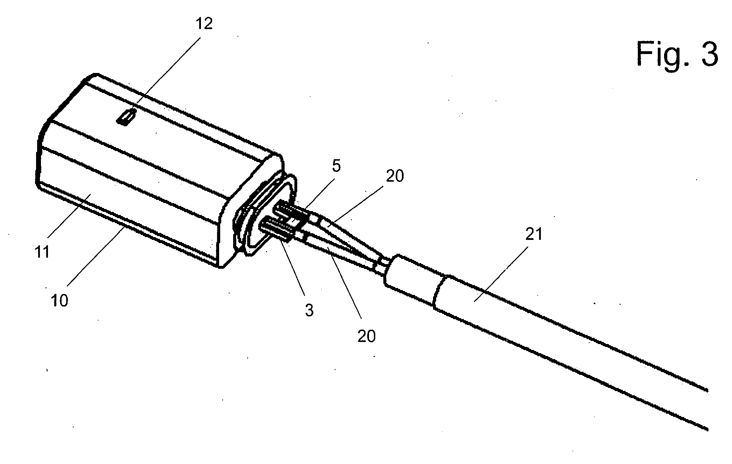

Je nach Ausführungsform kann noch vor der Auftrennung der Kontakte oder erst im nächsten Schritt die Befestigung der der elektrischen Leitungen an den Kontakten erfolgen. Dazu werden elektrische Leitungen 20 eines Kabels 21 an den Kabelanschlussenden 3 der Kontakte angebracht. Fig. 3 zeigt den Zustand nach Anbringung der Leitungen, jedoch vor Auftrennung der Kontakte. Zur Ausbildung eines möglichst kleinen Übergangswiderstandes zwischen den Leitungen 20 und den Kabelanschlussenden 3 eignen sich beispielsweise Befestigungsmethoden wie Löten, Crimpen oder Schweißen. Diese Art der Befestigung ist auch relativ unempfindlich gegen mechanische Beanspruchung, im Hinblick auf die unbeschadete Aufnahme von dauerhaften Schwingungen.

Bei der in Fig. 3 gezeigten Bauform erfolgt die Auftrennung der Kontakte durch Entfernung des Verbindungsstücks nach dem Anbringen der elektrischen Leitungen. Dies kann insbesondere den Schritt der Leiterbefestigung erleichtern, wenn die Kabelanschlussenden der Kontakte sehr dünn und biegsam ausgelegt sind, so dass eine höhere Steifigkeit durch die Verbindungsstücke erzielt wird.

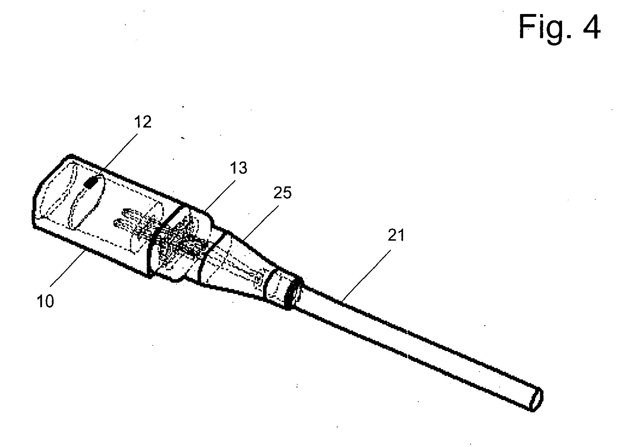

Fig. 4 zeigt in einer perspektivischen Ansicht den fertig gestellten Steckverbinder. Dieser wird nach dem Befestigen der Leitung 20 an den Kabelanschlussenden 3 erhalten, indem dieser Anschlussbereich durch einen weiteren Spritzvorgang mit Kunststoff umgeben wird. Dadurch wird ein hinterer Gehäuseabschnitt 25 erzeugt, der sowohl die Kabelanschlussenden 3 als auch den Endabschnitt des Kabels 21 umfasst und dort gleichzeitig als Zugentlastung wirkt.

Im Überdeckungsabschnitt 13 umgreift der hintere Gehäuseabschnitt 25 das hintere Ende des vorderen Gehäuseabschnitts 10. Durch den Spritzvorgang werden an der Innenseite des hinteren Gehäuseabschnitts 25 ebenfalls Abdichtringe erzeugt, die komplementär zu den Abdichtringen 14 am vorderen Gehäuseabschnitt verlaufen und zahnförmig in diese eingreifen. Auf diese Weise wird eine feuchtigkeitsdichte Verbindung zwischen den beiden Gehäuseabschnitten hergestellt, ohne das dafür eine stoffschlüssige Verbindung der beiden Kunststoffmaterialien notwendig wäre. Eine Erweichung des Materials des vorderen Gehäuseabschnittes 10 ist für das Ausbilden der feuchtigkeitsdichten Verbindung nicht erforderlich.

Es wird darauf aufmerksam gemacht, dass die Formgebung der Gehäuseabschnitte an den jeweiligen Einsatzfall beliebig angepasst werden kann. Diese Formgebung ist auch von der Anzahl und der Lage der benötigten Kontakte abhängig. Der vordere Gehäuseabschnitt kann auch in soweit abgewandelt werden, dass sie Kontaktspitzen nicht von einer Hülse umgeben sind und statt dessen frei zugänglich bleiben, wenn dies für den speziellen Anwendungsfall vorteilhaft ist. Das komplementäre Gegenstück des beschriebenen Steckverbinders kann auf dieselbe Weise erzeugt werden oder aber auch als frei liegende Kontaktanordnung auf einem Trägermaterial, beispielsweise einer gedruckten Schaltung, ausgebildet sein.

### Bezugszeichenliste

- 1: - Kontakte
- 2: - Kontaktspitzen
- 3: - Kabelanschlussenden
- 4: - Haltebereiche
- 5: - Verbindungsstück
- 6: - Sollbruchstellen

- 10: - vorderer Gehäuseabschnitt
- 11: - hülsenförmiger Bereich
- 12: - Kupplungsmittel
- 13: - Überdeckungsabschnitt
- 14: - Abdichtringe

- 20: - Leitungen
- 21: - Kabel

- 25: - hinterer Gehäuseabschnitt

## Patentansprüche

1. Verfahren zur Herstellung eines elektrischen Steckverbinders mit mehreren Kontakten (1), die folgenden Schritte umfassend:
- Erzeugen der Kontakte (1) aus einem elektrisch leitfähigen Kontaktmaterial, wobei mehrere oder alle zum Steckverbinder gehörenden Kontakte (1) an Verbindungsstellen (5) miteinander verbunden bleiben;
- Einlegen der verbundenen Kontakte (1) in eine Spritzform;
- formschlüssiges Umspritzen der Kontakte (1) in einem mittleren Haltebereich (4) mit einem Kunststoff zur Ausbildung eines vorderen Gehäuseabschnitts (10), wobei die vorderen Kontaktspitzen (2), die Verbindungsstelle (5) und die.hinteren Kabelanschlussenden (3) der Kontakte (1) zugänglich bleiben;
- Trennen der Kontakte (1) an der Verbindungsstelle.(5) und Befestigung von elektrischen Leitungen (20) an den Kabelanschlussenden (3) der Kontakte, wobei diese beiden Teilschritte in beliebiger Reihenfolge ausführbar sind;
- formschlüssiges Umspritzen der Kabelanschlussenden (3) und der daran befestigten Leitungen (20) mit einem Kunststoff zur Ausbildung eines hinteren Gehäuseabschnitts (25), wobei in einem Überdeckungsabschnitt (13) eine form- und kraftschlüssige Verbindung mit dem vorderen Gehäuseabschnitt (10) ausgebildet wird.

2. Verfahren nach Anspruch 1, **dadurch gekennzeichnet, dass** beim Spritzen des vorderen Gehäuseabschnitts (10) an diesem Kupplungsmittel (12) ausgebildet werden, die der mechanischen Ankopplung an ein komplementäres Steckergegenstück dienen.

3. Verfahren nach Anspruch 1 oder 2, **dadurch gekennzeichnet, dass** im Überdeckungsabschnitt (13) ein oder mehrere parallel zueinander verlaufende Abdichtringe (14) sowohl am vorderen als auch am hinteren Gehäuseabschnitt (10, 25) ausgebildet werden, die zahnförmig ineinander eingreifen.

4. Verfahren nach einem der Ansprüche 1 bis 3, **dadurch gekennzeichnet, dass** die Befestigung der elektrischen Leitungen (20) an den Kabelanschlussenden (3) durch Löten, Schweißen oder Crimpen erfolgt.

5. Verfahren nach einem der Ansprüche 1 bis 4, **dadurch gekennzeichnet, dass** beim Erzeugen der Kontakte (1) zwischen benachbarten Kontakten ein Verbindungsstück (5) bestehen bleibt, welches auf jeder Seite jeweils mit dem angrenzenden Kontakt (1) verbunden ist und welches beim Trennen der Kontakte entfernt wird.

6. Verfahren nach Anspruch 5, **dadurch gekennzeichnet, dass** das Verbindungsstück (5) jeweils über eine Sollbruchstelle (6) mit dem angrenzenden Kontakt (1) verbunden ist.

7. Verfahren nach einem der Ansprüche 1 bis 6, **dadurch gekennzeichnet, dass** mehrere Kontakte (1) jeweils zu einer Gruppe zusammengefasst sind und mehrere solcher Gruppen vor dem Umspritzen in die Spritzform eingelegt werden.

8. Steckverbinder mit mehreren Kontakten (1), an diesen angeschlossenen Leitern (20) und einem Gehäuse, wobei Halteabschnitte (4) der Kontakte in einem vorderen Gehäuseabschnitt (10) aus Kunststoff eingespritzt sind und Kabelanschlussenden (3) der Kontakte mit den daran angeschlossenen elektrischen Leitern (20) in einem hinteren Gehäuseabschnitt (25) eingespritzt sind, **dadurch gekennzeichnet, dass** der hintere Gehäuseabschnitt (25) den vorderen Gehäuseabschnitt (10) in einem Überdeckungsabschnitt (13) form- und kraftschlüssig umgreift, wobei im Überdeckungsabschnitt ein oder mehrere parallel zueinander verlaufende Abdichtringe (14) sowohl am vorderen als auch am hinteren Gehäuseabschnitt ausgebildet sind, die zahnförmig ineinander eingreifen.

9. Steckverbinder nach Anspruch 8, **dadurch gekennzeichnet, dass** im Überdeckungsabschnitt (13) eine wasserdichte Verbindung zwischen vorderem und hinterem Gehäuseabschnitt (10, 25) ausgebildet ist.

10. Steckverbinder nach Anspruch 8 oder 9, **dadurch gekennzeichnet, dass** der hintere Gehäuseabschnitt (25) aus einem anderen Kunststoff als der vordere Gehäuseabschnitt (10) gebildet ist.

11. Steckverbinder nach Anspruch 10, **dadurch gekennzeichnet, dass** entweder der hintere oder der vordere Gehäuseabschnitt (25, 10) aus einem gummielastischen Kunststoff bestehen.

12. Steckverbinder nach einem der Ansprüche 8 bis 11, **dadurch gekennzeichnet, dass** die vorderen Kontaktspitzen (2) der Kontakte (1) von einem hülsenförmigen Bereich (11) des vorderen Gehäuseabschnitts (10) umfasst sind, in welchen ein komplementäres Steckergegenstück einschiebbar ist.

## Claims

1. Method for manufacturing an electrical plug-in connector having a plurality of contacts (1), comprising the following steps:
- producing the contacts (1) from an electrically conductive contact material, a plurality of contacts or all contacts (1) belonging to the plug-in connector remaining connected to one another at connection points (5);
- inserting the connected contacts (1) into an injection-moulding die;
- form-fitted injection-moulding around the contacts (1) in a central holding region (4) with a plastics material for forming a front housing portion (10), the front contact tips (2), the connection point (5) and the rear cable connection ends (3) of the contacts (1) remaining accessible;
- separating the contacts (1) at the connection point (5) and fastening electrical lines (20) to the cable connection ends (3) of the contacts, said two substeps being able to be carried out in any desired sequence;
- form-fitted injection-moulding around the cable connection ends (3) and the lines (20) fastened thereto with a plastics material for forming a rear housing portion (25), a form-fitted and force-fitted connection being formed with the front housing portion (10) in a covering portion (13).

2. Method according to claim 1, **characterised in that** when injection-moulding the front housing portion (10) coupling means (12) are formed thereon, which serve for mechanically coupling to a complementary plug-in object.

3. Method according to claim 1 or 2, **characterised in that** in the covering portion (13) one or more sealing rings (14) extending parallel to one another are formed both on the front and on the rear housing portion (10, 25) which dentoid engage in one another.

4. Method according to one of claims 1 to 3, **characterised in that** the fastening of the electrical lines (20) to the cable connection ends (3) is carried out by soldering, welding or crimping.

5. Method according to one of claims 1 to 4, **characterised in that**, when producing the contacts (1), a connection piece (5) remains between adjacent contacts, said connection piece being connected on each side and in each case to the adjacent contact (1) and which is removed when separating the contacts.

6. Method according to claim 5, **characterised in that** the connection piece (5) in each case is connected to the adjacent contact (1) via a predetermined breaking point (6).

7. Method according to one of claims 1 to 6, **characterised in that** a plurality of contacts (1) in each case are combined to form a group, and a plurality of such groups are inserted into the injection-moulding die before the injection moulding.

8. Plug-in connector comprising a plurality of contacts (1), conductors (20) connected thereto, and a housing, whereby holding portions (4) of the contacts being injection-moulded from plastics material in a front housing portion (10) and cable connection ends (3) of the contacts with the electrical conductors (20) connected thereto being injection-moulded in a rear housing portion (25), **characterised in that** the rear housing portion (25) engages form-fitted and force-fitted around the front housing portion (10) in a covering portion (13), whereby in the covering portion one or more sealing rings (14) extending parallel to one another being formed both on the front and on the rear housing portion, which dentoid engage in one another.

9. Plug-in connector according to claim 8, **characterised in that** a watertight connection is formed in the covering portion (13) between the front and rear housing portion (10, 25).

10. Plug-in connector according to claim 8 or 9, **characterised in that** the rear housing portion (25) is formed from a different plastics material than the front housing portion (10).

11. Plug-in connector according to claim 10, **characterised in that** either the rear or the front housing portion (25, 10) consist of a rubber-elastic plastics material.

12. Plug-in connector according to one of claims 8 to 11, **characterised in that** the front contact tips (2) of the contacts (1) are encompassed by a sleeve-shaped region (11) of the front housing portion (10) into which a complementary plug-in mating piece may be inserted.

## Revendications

1. Procédé pour établir une liaison électrique par enfichage comprenant plusieurs contacts (1), qui comportent les étapes suivantes :
- génération des contacts (1) à partir d'un matériau de contact électriquement conductible, plusieurs ou tous les contacts (1) faisant partie du connecteur restant reliés les uns aux autres aux points de liaison (5) ;
- insertion des contacts (1) reliés dans un moule à injection ;
- surmoulage par complémentarité de formes des contacts (1) dans une zone de retenue (4) centrale avec un plastique pour la formation d'une partie de boîtier (10) avant, les pointes de contact (2) avant, le point de liaison (5) et les extrémités de raccordement de câble (3) arrière des contacts (1) restant accessibles ;
- séparation des contacts (1) au point de liaison (5) et fixation de lignes électriques (20) sur les extrémités de raccordement de câble (3) des contacts, ces deux étapes partielles étant réalisables dans un ordre quelconque ;
- surmoulage par complémentarité de formes des extrémités de raccordement de câble (3) et des lignes (20) fixées dessus avec un plastique pour former une partie de boîtier (25) arrière, une liaison par complémentarité de formes et par adhérence des forces avec la partie de boîtier (10) avant étant réalisée dans une partie de recouvrement (13).

2. Procédé selon la revendication 1, **caractérisé en ce que** des moyens d'accouplement (12), qui servent au rattachement mécanique à une pièce inverse de fiche complémentaire, sont formés lors du moulage de la partie de boîtier (10) avant sur ce boîtier.

3. Procédé selon la revendication 1 ou 2, **caractérisé en ce qu'**une ou plusieurs bagues d'étanchéité (14) agencées parallèlement entre elles, qui s'engagent les unes dans les autres à la façon de dents, sont formées dans la partie de recouvrement (13) aussi bien sur la partie de boîtier avant que sur la partie de boîtier (10, 25) arrière.

4. Procédé selon l'une quelconque des revendications 1 à 3, **caractérisé en ce que** la fixation des lignes (20) électriques sur les extrémités de raccordement de câble (3) s'effectue par brasage, soudage ou sertissage.

5. Procédé selon l'une quelconque des revendications 1 à 4, **caractérisé en ce que**, lors de la génération des contacts (1) entre des contacts voisins, il reste une pièce de jonction (5) qui est reliée sur chaque côté respectivement avec le contact (1) contigu et qui est enlevée lors de la séparation des contacts.

6. Procédé selon la revendication 5, **caractérisé en ce que** la pièce de jonction (5) est reliée respectivement au moyen d'un point de rupture théorique (6) avec le contact (1) contigu.

7. Procédé selon l'une quelconque des revendications 1 à 6, **caractérisé en ce que** plusieurs contacts (1) sont regroupés respectivement en un groupe et plusieurs groupes de ce type sont insérés dans le moule d'injection avant le surmoulage.

8. Connecteur comprenant plusieurs contacts (1), des conducteurs (20) raccordés à ces contacts et un boîtier, des parties de retenue (4) des contacts étant injectées dans une partie de boîtier (10) avant en plastique et des extrémités de raccordement de câble (3) des contacts étant injectées avec les conducteurs (20) électriques raccordés dessus dans une partie de boîtier (25) arrière, **caractérisé en ce que** la partie de boîtier (25) arrière entoure la partie de boîtier (10) avant dans une partie de recouvrement (13) par complémentarité de formes et par adhérence des forces, une ou plusieurs bagues d'étanchéité (14) agencées parallèlement entre elles, qui s'engagent les unes dans les autres à la façon de dents, étant réalisées dans la partie de recouvrement aussi bien sur la partie de boîtier avant que sur la partie de boîtier arrière.

9. Connecteur selon la revendication 8, **caractérisé en ce qu'**une liaison étanche à l'eau est réalisée dans la partie de recouvrement (13) entre la partie de boîtier avant et la partie de boîtier arrière (10, 25).

10. Connecteur selon la revendication 8 ou 9, **caractérisé en ce que** la partie de boîtier (25) arrière est formée dans un plastique autre que celui de la partie de boîtier (10) avant.

11. Connecteur selon la revendication 10, **caractérisé en ce que** soit la partie de boîtier arrière soit la partie de boîtier avant (25, 10) est à base d'un plastique élastique comme du caoutchouc.

12. Connecteur selon l'une quelconque des revendications 8 à 11, **caractérisé en ce que** les extrémités de contact (2) avant des contacts (1) sont entourées d'une zone (11) en forme de manchon de la partie de boîtier avant (10), dans laquelle une pièce inverse de fiche complémentaire peut être introduite.
